## Europäisches Patentamt

## European Patent Office

## Office européen des brevets

(19)

(11) Veröffentlichungsnummer: **0 043 870**
**B1**

(12) **EUROPÄISCHE PATENTSCHRIFT**

(45) Veröffentlichungstag der Patentschrift:
**09.11.83**

(21) Anmeldenummer: **80106441.1**

(22) Anmeldetag: **22.10.80**

(51) Int. Cl.³: **B 29 H 19/00,** E 04 C 3/28,
E 04 C 2/26

(54) Verfahren zur Herstellung von Bauelementen aus Altreifen und Baukörper, hergestellt aus diesen Bauelementen.

(30) Priorität: **10.07.80 AT 3583/80**

(43) Veröffentlichungstag der Anmeldung:
**20.01.82 Patentblatt 82/3**

(45) Bekanntmachung des Hinweises auf die Patenterteilung:
**09.11.83 Patentblatt 83/45**

(84) Benannte Vertragsstaaten:
**BE CH DE FR GB IT LI NL**

(56) Entgegenhaltungen:
**DE - A - 1 915 952**
**DE - A - 2 514 830**
**DE - A - 2 531 923**
**FR - A - 1 579 968**

(73) Patentinhaber: **Reitinger, Friedrich, Kriegen 9,
A-4761 Enzenkirchen (AT)**

(72) Erfinder: **Reitinger, Friedrich, Kriegen 9,
A-4761 Enzenkirchen (AT)**

(74) Vertreter: **Patentanwälte Zellentin,
Zweibrückenstrasse 15, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von Bauelementen aus Altreifen und Baukörper,
hergestellt aus diesen Bauelementen

Die Erfindung betrifft ein Verfahren zur Herstellung von Bauelementen aus Altreifen sowie Baukörper, hergestellt aus diesen Bauelementen.

Aus der DE-A-2 514 830 sind ein Verfahren zur Verwertung von gebrauchten Fahrzeugreifen und nach diesem Verfahren hergestellte Bauelementen bekannt. Hierbei werden die Reifen koaxial oder in einer Ebene miteinander auf vielfältige Weise zu Rohrkörpern, Ketten oder Netzwerken verbunden. Hierbei bleiben die Reifen in ihrem runden Zustand oder sie können auch entlang des Durchmessers halbiert werden. Auch können sie in eine andere Größe des Kreissegments unterteilt sein. Die verbundenen Reifen dienen in Form von Rohren z. B. als Drainage-, Kanalisations-, Isolier- oder Schutzrohre, als stützende Verschalung von Steig- oder Schützenlöchern von Säulenfundamenten und geteilt als Abdeckung von Rinnen und Wasserläufen. Als Netzwerke finden die Reifen insbesondere als Befestigungen für Ufer, Deiche, Dämme und dergleichen Verwendung. Hierbei sind, da die Reifen in ihrer runden Form verbleiben bzw. nur geteilt werden, die Anwendungsmöglichkeiten eingeschränkt, da die Reifengröße Mindestabmessungen vorgibt und es nur ermöglicht runde bzw. halbrunde Gegenstände herzustellen. Außerdem sind überwiegend nur Reifen mit gleichen Radien — zumindest bei Rohren — einsetzbar, was bei den vielen Reifengrößen Sortierungs- und Lagerprobleme aufwirft.

Aufgabe der Erfindung ist ein Verfahren zur Verwertung von Altreifen auch von unterschiedlichen Abmessungen und daraus hergestellte, verschiedenen Verwendungszwecken angepaßte Baukörper anzugeben, die auch mit geringen Abmessungen, eckigen Kanten und auch in Form von geschlossenen Gerüsten herstellbar sind, die z. B. als Schalungen für Wände einsetzbar sind.

Die Aufgabe wird durch die im kennzeichnenden Teil des Anspruchs 1 definierten Maßnahmen gelöst. Vorzugsweise Ausführungen des Verfahrens sind den Unteransprüchen 2 bis 11 zu entnehmen.

Den Ansprüchen 12 bis 15 sind vorzugsweise Baukörper, hergestellt aus den Bauelementen gemäß den Verfahrensansprüchen, zu entnehmen.

Nachstehend wird die Erfindung anhand von nach dem erfindungsgemäßen Verfahren hergestellten Bauelementen und einem daraus gebildeten Baukörper als Wand unter Angabe von Vorteilen und unter bezug auf Zeichnungen näher erläutert. Es zeigt

Fig. 1 eine Draufsicht auf einen zur Erstellung von Bauelementen vorgefertigten Altreifen,

Fig. 2 ein Bauelement aus Hauptsegmenten in Form einer hohlen, einseitig offenen Säule in Seitenansicht,

Fig. 3 einen Schnitt gemäß Linie III-III nach Fig. 2,

Fig. 4 ein Bauelement aus keilförmigen Segmenten in Form einer allseitig geschlossenen Säule in Seitenansicht,

Fig. 5 einen Schnitt gemäß Linie V-V nach Fig. 4,

Fig. 6a – h Verbindungsanordnungen von zwei oder mehreren Hauptsegmenten in schematischer Darstellung,

Fig. 7 eine Wand aus Säulen mit Bewehrungs- bzw. Befestigungselementen in perspektivischer Darstellung, bei der auf einer Seite eine Putz- und Lattenverkleidung angebracht ist.

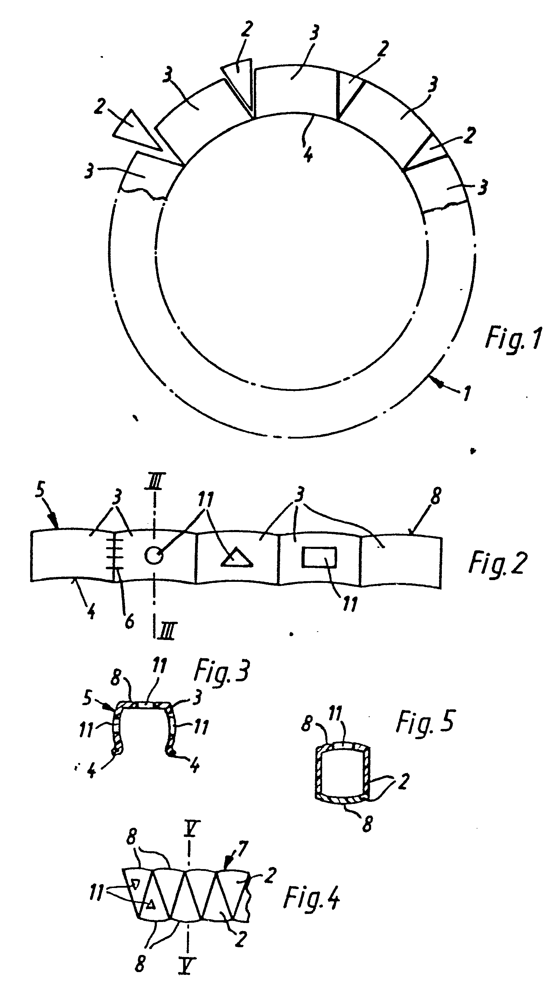

Aus einem Altreifen 1 werden derart keilförmige Segmente 2 herausgeschnitten, daß Hauptelemente 3 mit etwa parallelen Schnittkanten verbleiben, wobei vorzugsweise der Wulstkern 4 nur einmal durchschnitten wird. Die durch den Wulstkern 4 verbundenen Hauptsegmente 3 werden so ausgerichtet, daß eine einseitig offene Säule 5 (Fig. 2, 3) entsteht. Die so an den Schnittkanten aneinanderliegenden Segmente 3 können durch Klammern 6 (Fig. 2) oder durch geeignete Klebstoffe oder andere Verbindungsmittel mit einander fest verbunden werden und bilden vorgefertigte Bauelemente.

Die ausgeschnittenen, keilförmigen Segmente 2 können zu einer allseitig geschlossenen Säule 7 (s. Fig. 4, 5) verbunden werden, wobei die Lauffläche 8 des einen keilförmigen Segments 3 der Lauffläche 8 des benachbarten keilförmigen Segments gegenüberliegt.

Die einseitig offenen Säulen 5 oder deren einzelne Hauptsegmente 3 und die allseitig geschlossenen Säulen 7 bilden Grundbauelemente.

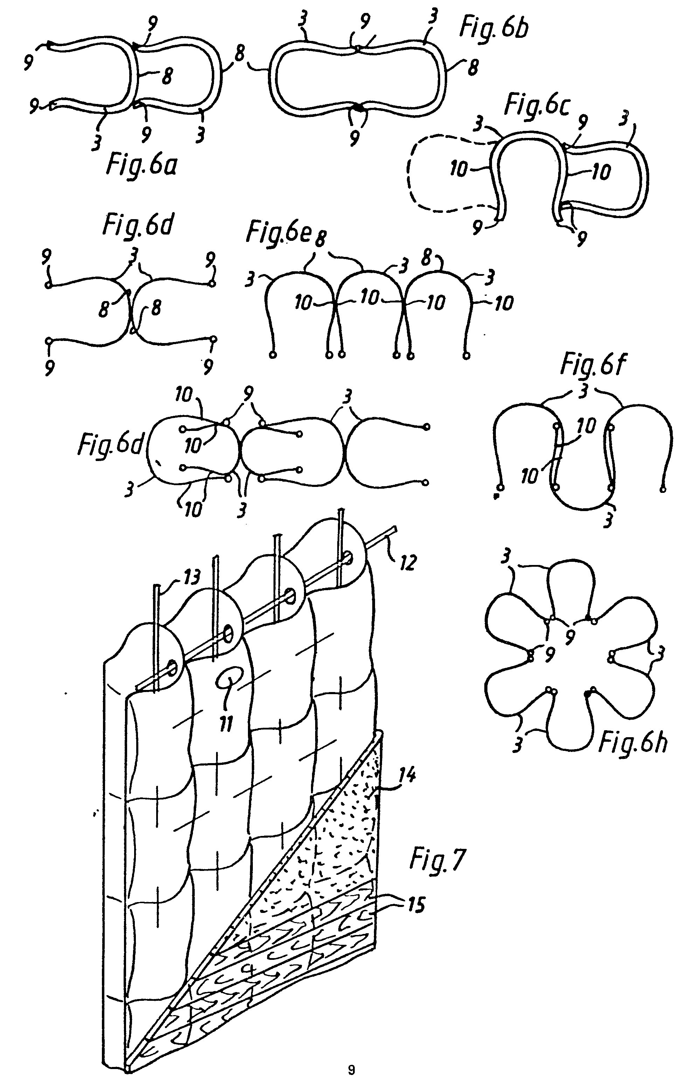

Zu kombinierten Bauelementen und weiter zu Baukörpern werden insbesondere einseitig offene Säulen 5 und/oder einzelne Hauptsegmente 3 miteinander verbunden, wobei folgende Verbindungsmöglichkeiten bestehen (siehe auch Fig. 6):

a) die Wülste 9 eines Hauptsegments 3 werden im Randbereich der Lauffläche 8 eines zweiten Hauptsegments 3 (Fig. 6a) befestigt usw.,

b) die Wülste 9 eines Hauptsegments 3 werden mit den Wülsten 9 eines (Fig. 6b) oder mehrerer (Fig. 6h) Hauptsegmente 3 zu einem allseitig geschlossenen Säulenmonument verbunden,

c) auf einer oder beiden Seitenflächen 10 eines Hauptsegments 3 werden weitere Hauptsegmente 3 mit ihren Wülsten 9 befestigt (Fig. 6c),

d) die Laufflächen 8 zweier Hauptsegmente 3 werden miteinander verbunden (Fig. 6d),

e) die äußeren Seitenflächen 10 eines Hauptsegments 3 werden mit den äußeren Seitenflächen 10 weiterer Hauptsegmente 3 verbunden, wobei ihre Laufflächen 8 in eine Richtung (Fig. 6e) oder abwechselnd in entgegengesetzte Richtungen (nicht dargestellt) zeigen,

f)  die inneren Seitenflächen 10 eines Hauptsegments 3 werden mit einer inneren Seitenfläche 10 der benachbarten Hauptsegmente 3 verbunden (Fig. 6f),

g)  die inneren Seitenflächen 10 eines Hauptsegments 3 werden mit den äußeren Seitenflächen 10 eines zweiten Hauptsegments 3 verbunden (Fig. 6g), d. h. ein Hauptsegment 3 ist in das andere eingeschoben, hierbei können die Segmente einen gleichen oder unterschiedlichen Querschnitt aufweisen.

Die dargestellten Verbindungsmöglichkeiten sind auch beliebig kombinierbar um z. B. Eck- und Kreuzverbindungen herzustellen oder um allseitig geschlossene im Wechsel mit offenen Hauptsegmenten 3 nebeneinander anzuordnen; es können auch Aussparungen für Öffnungen, z. B. Fenster, Türen vorgesehen werden.

In den Hauptsegmenten 3 und auch in den keilförmigen Segmenten 2 können in ihren Seitenflächen 10 und/oder in den Laufflächen 8 durchgehende Öffnungen 11 (Fig. 2 bis 5) beliebiger Gestalt ausgeführt werden.

Die Verbindung der Säulen 5 bzw. der Hauptsegmente 3 in paralleler oder sonstiger Anordnung kann z. B. durch Klammern 6, durch Nieten, durch geeignete Klebstoffe oder auch durch durch die Öffnungen 11 gesteckter Befestigungselemente z. B. in Form von Stäben 12 (Fig. 7), an denen die Hauptsegmente 3 einzeln oder auch mehrere zusammen auf beliebige Art befestigt werden, erfolgen.

Es können auch Stäbe 13 (Fig. 7) in den Hohlräumen einzelner Säulen 5 angeordnet und mit den eigentlichen Befestigungsstäben 12 zu einem Bewehrungsgitter verbunden werden.

Die durch die Verbindungen der Hauptsegmente 3 bzw. Säulen 5 gebildeten Hohlräume und auch die Hohlräume der allseitig geschlossenen Säulen 7 können ganz oder teilweise mit der gleichen oder über die Höhe auch mit unterschiedlichen Füllmassen ausgefüllt werden, z. B. mit einem beliebigen Beton, einem ausschäumenden Kunststoff oder auch mit Schüttgütern, wie Erde oder dergleichen.

Die Außenflächen von aus den Segmenten 2 und 3 gebildeten Wänden können verkleidet sein, beispielsweise mittels einer Haftgrundschicht und einem darauf aufgebrachten Zierputz 14 (Fig. 7), sie können aber auch durch ein Mauerwerk oder durch ein Flechtwerk oder Bretter 15 abgedeckt werden (Fig. 7).

Die Erfindung kann zur Erstellung von beliebigen Baukörpern bzw. deren Teilen, wie Wänden, Pfosten und Stützpfeilern verwendet werden, hierbei bilden die Reifensegmente nicht nur eine hervorragende Isolierung, sondern auch jegliche Schaltung ist überflüssig. Es ist ohne weiteres möglich, eine Bewehrung vorzusehen, falls dies erforderlich ist.

Eine Wand, die vorzugsweise nach dem Prinzip e aufgebaut ist, das in Fig. 6e gezeigt ist, kann als Schallschluckwand und auch als Aufpralldämmung (Fangzaun) z. B. an Straßen und Autobahnen dienen, hierbei kann die dem Anlieger zugewandte Seite mit Holzlatten oder einem farbigen Kunststoffputz verkleidet werden bzw. auch mit einem stabilen Stützgerüst, z. B. Metall versehen sein.

Die erfindungsgemäß hergestellten Wände können auch zur Wärmeisolierung verwendet werden, wobei die Hohlräume zusätzlich mit einem Isoliermittel gefüllt werden können. Sie können aber auch als Splitter-, Aufprall- oder Schießwände dienen, wobei sich ineinandergeschachtelte Anordnungen, z. B. gemäß Fig. 6g anbieten.

Wenn Öffnungen 11 an den Außenseiten der gebildeten Wände, Pfeiler etc. vorgesehen sind und die Hohlräume z. B. mit Erdboden gefüllt sind, lassen sich »grünende« und »blühende« Wände, Pfeiler etc. bilden.

Außerdem lassen sich Schlammatten für Fußgängerübergänge, Fahrwege und Baustellen herstellen.

Eine weitere Anwendungsmöglichkeit besteht in der Verwendung als Vibrationsdämmung, z. B. in Form von Matten, für die stationäre oder vorübergehende Anordnung von Vibrationen erzeugenden Maschinen.

Die Kombinations- und Anwendungsmöglichkeiten sind hier nur beispielhaft und keineswegs vollständig angeführt. Der Grundvorteil der Erfindung liegt darin, daß die Altreifen verwertet werden und keine Umweltbelastung bilden und daß gleichzeitig die Eigenschaften des Gummis und/oder des Reifenprofils für die Wärme- und/oder Schalldämmung, für die Feuchtigkeitsisolierung, für Prallwände und dergleichen ausnutzbar sind.

**Patentansprüche**

1. Verfahren zur Herstellung von Bauelementen aus Altreifen, dadurch gekennzeichnet, daß aus den Altreifen (1) derart keilförmige Segmente (2) herausgeschnitten werden, daß Hauptsegmente (3) mit parallelen Schnittkanten gewonnen werden und daß die Wulstkerne (4) wenigstens an einer Ausschnittstelle der keilförmigen Segmente (2) durchtrennt und wenigstens zwei Segmente (2 oder 3) zu einem Bauelement verbunden werden.

2. Verfahren nach Anspruch 1, dadurch gekennzeichnet, daß in den Segmenten (2, 3) durchgehende Öffnungen (11) ausgeführt werden.

3. Verfahren nach Anspruch 1 oder 2, dadurch gekennzeichnet, daß wenigstens zwei Segmente (2 oder 3) an ihren aneinandergelegten Schnittkanten miteinander zu einseitig offenen oder geschlossenen Säulen (5 oder 7) verbunden werden.

4. Verfahren nach Anspruch 1, 2 oder 3, dadurch gekennzeichnet, daß wenigstens zwei Hauptsegmente (3) achsparallel miteinander verbunden werden.

5. Verfahren nach Anspruch 4, dadurch gekennzeichnet, daß ein Hauptsegment (3) mit seinen Wülsten (9) mit den Randbereichen der Lauffläche (8) des zweiten Hauptsegments (3) verbunden wird.

6. Verfahren nach Anspruch 4, dadurch gekennzeichnet, daß ein Hauptsegment (3) mit seiner Lauffläche (8) mit der Lauffläche (8) eines zweiten Hauptsegments (3) verbunden wird.

7. Verfahren nach Anspruch 4, dadurch gekennzeichnet, daß ein Hauptsegment (3) mit seinen Wülsten (9) mit den Wülsten (9) eines zweiten Hauptsegments (3) verbunden wird.

8. Verfahren nach Anspruch 4, dadurch gekennzeichnet, daß ein Hauptsegment (3) mit einer äußeren Seitenfläche (10) mit einer äußeren Seitenfläche (10) eines zweiten Hauptsegments (3) verbunden wird.

9. Verfahren nach Anspruch 4, dadurch gekennzeichnet, daß ein Hauptsegment (3) mit einer äußeren Seitenfläche (10) mit der inneren Seitenfläche (10) eines zweiten Hauptsegments (3) verbunden wird.

10. Verfahren nach Anspruch 4, dadurch gekennzeichnet, daß ein Hauptsegment (3) mit seinen inneren Seitenflächen (10) mit den äußeren Seitenflächen (10) eines zweiten Hauptsegments (3) verbunden wird.

11. Verfahren nach Anspruch 4, dadurch gekennzeichnet, daß ein Hauptsegment (3) mit seinen Wülsten (9) mit einer äußeren Seitenfläche (10) eines zweiten Hauptsegments verbunden wird.

12. Baukörper, dadurch gekennzeichnet, daß er aus mehreren Bauelementen besteht, die nach einem oder mehreren der Ansprüche 1 bis 10 hergestellt sind.

13. Baukörper nach Anspruch 12, dadurch gekennzeichnet, daß in den Hohlräumen der Segmentsäulen (5, 7) und/oder in den Öffnungen (11) mehrerer miteinander verbundener Hauptsegmente (3) Stütz- bzw. Bewehrungsstäbe (12, 13) angeordnet sind, die gegebenenfalls miteinander verknüpft sind.

14. Baukörper nach Anspruch 12 oder 13, dadurch gekennzeichnet, daß seine Hohlräume mit einer Füllmasse gefüllt sind.

15. Baukörper nach einem der Ansprüche 12 bis 14, dadurch gekennzeichnet, daß wenigstens an einer seiner Außenseiten Verkleidungen (14, 15) angebracht sind.

## Claims

1. Method for producing building elements from used tyres, characterised in that wedge-shaped segments (2) are cut from the used tyres (1) so that main segments (3) with parallel cut edges are obtained and that the bead cores (4) are cut through, at least at one cutting place of the wedge-shaped segments (2) and at least two segments (2 or 3) are combined to from one building element.

2. Method according to claim 1, characterised in that apertures (11) are formed in the segments (2, 3).

3. Method according to claim 1 or 2, characterised in that adjoining cut edges of at least two segments (2 or 3) are joined to each other to form columns (5 or 7), which are open on one side or are closed.

4. Method according to claim 1, 2 or 3, characterised in that at least two principal segments (3) are joined to each other in axially parallel configuration.

5. Method according to claim 4, characterised in that the beads (9) of the principal segments (3) are joined to the edge regions of the tread surface (8) of the second principal segment (3).

6. Method according to claim 4, characterised in that the tread surface (8) of a principal segment (3) is joined to the tread surface (8) of a second principal segment (3).

7. Method according to claim 4, characterised in that the beads (9) of a principal segment (3) are joined to the beads (9) of a second principal segment (3).

8. Method according to claim 4, characterised in that the external side surface (10) of a principal segment (3) is joined to one external side surface (10) of a second principal segment (3).

9. Method according to claim 4, characterised in that one external side surface (10) of a principal segment (3) is joined to the internal side surface (10) of a second principal segment (3).

10. Method according to claim 4, characterised in that the internal side surfaces (10) of a principal segment (3) are joined to the external side surfaces (10) of a second principal segment (3).

11. Method according to claim 4, characterised in that the beads (9) of a principal segment (3) are joined to one external side surface (10) of a second principal segment.

12. Building structure, characterised in that it comprises a plurality of building elements which are produced according to one or several of the claims 1 to 10.

13. Building structure according to claim 12, characterised in that a plurality of principal segments (3), which are joined to each other, supporting or reinforcing bars (12, 13), which can also be joined to each other where appropriate, are disposed in the cavities of the segment columns (5, 7) and/or in the apertures (11).

14. Building structure according to claim 12 or 13, characterised in that its cavities are filled with a filling compound.

15. Building structure according to any of the claims 12 to 14, characterised in that cladding (14, 15) is attached to at least one of its external sides.

## Revendications

1. Procédé pour la fabrication d'éléments de construction à partir de pneumatiques usés, caractérisé par le fait qu'à partir des pneumatiques usés (1) on coupe des segments (2) en forme de coin de manière à optenir des segments principaux (3) aux arêtes de coupe parallèles et à ce que les tringles de talon (4) soient coupées au moins à un point de coupe des segments (2) en forme de coin et qu'au moins deux segments (2 ou 3) soient reliés pour former un élément de construction.

2. Procédé selon la revendication 1, caractérisé en ce que, dans les segments (2, 3), des ouvertures (11) sont exécutées traversant ceux-ci de part en part.

3. Procédé selon la revendication 1 ou la revendication 2, caractérisé en ce qu'au moins deux segments (2 ou 3) sont reliés entre eux par leurs arêtes de coupe réunies pour former des colonnes (5 ou 7) ouvertes d'un côté ou fermées.

4. Procédé selon les revendications 1, 2 ou 3, caractérisé en ce qu'au moins deux segments principaux (3) sont réunis ensemble avec leurs axes parallèles.

5. Procédé selon la revendication 4, caractérisé en ce qu'un segment principal (3) est relié par ses talons (9) aux zones marginales de la bande d'usure (8) du second segment principal (3).

6. Procédé selon la revendication 4, caractérisé en ce qu'un segment principal (3) est relié par sa bande d'usure (8) à la bande d'usure (8) d'un second segment principal (3).

7. Procédé selon la revendication 4, caractérisé en ce qu'un segment principal (3) est relié par ses talons (9) aux talons (9) d'un second segment principal (3).

8. Procédé selon la revendication 4, caractérisé en ce qu'un segment principal (3) est relié par un flanc extérieur (10) à un flanc extérieur (10) d'un second segment principal (3).

9. Procédé selon la revendication 4 caractérisé en ce qu'un segment principal (3) est relié par un flanc extérieur (10) au flanc intérieur (10) d'un second segment principal (3).

10. Procédé selon la revendication 4, caractérisé en ce qu'un segment principal (3) est relié par ses flancs intérieurs (10) aux flancs extérieurs (10) d'un second segment principal (3).

11. Procédé selon la revendication 4, caractérisé en ce qu'un segment principal (3) est relié par ses talons (9) à un flanc extérieur (10) d'un second segment principal.

12. Elément de construction, caractérisé en ce qu'il est composé de plusieurs éléments de construction qui sont fabriqués selon une ou plusieurs des revendications 1 à 10.

13. Elément de construction selon la revendication 12, caractérisé en ce que sont placées des barres de soutien ou respectivement d'armature (12, 13) dans les cavités des colonnes des segments (5, 7) et/ou dans les ouvertures (11) de plusieurs segments principaux (3) reliés entre eux, barres, qui, le cas échéant, sont reliées entre elles.

14. Elément de construction selon la revendication 12 ou la revendication 13, caractérisé en ce que ses cavités sont remplies d'une masse de remplissage.

15. Elément de construction selon une des revendications 12 à 14, caractérisé en ce que des revêtements (14, 15) sont placés au moins sur une de ses faces extérieures.

Fig. 1

Fig. 2

Fig. 3

Fig. 5

Fig. 4

0 043 870

Fig. 6b

Fig.6c

Fig. 6a

Fig. 6d

Fig. 6e

Fig. 6f

Fig. 6d

Fig. 6h

Fig. 7

9